# EUROPÄISCHE PATENTSCHRIFT

(11) **EP 1 988 310 B1**
(45) Veröffentlichungstag und Bekanntmachung des Hinweises auf die Patenterteilung: **09.08.2017**
(21) Anmeldenummer: 08008153.2
(22) Anmeldetag: 29.04.2008
(51) Int. Cl.: F16H 55/17, F16H 55/38, F16H 57/04

(54) **Zahnriemenrad**
Toothed belt wheel
Roue à courroie dentée

(30) Priorität: 30.04.2007 AT 6732007
(43) Veröffentlichungstag der Anmeldung: 05.11.2008
(73) Patentinhaber: Miba Sinter Austria GmbH, 4663 Laakirchen (AT)
(72) Erfinder: Dickinger, Karl, 4655 Vorchdorf (AT); Schmid, Herbert, 4655 Vorchdorf (AT); Siessl, Wolfgang, 4801 Traunkirchen (AT)
(74) Vertreter: Ofner, Clemens

(56) Entgegenhaltungen:
- DE-A1- 3 124 320
- GB-A- 2 114 260
- GB-A- 2 116 289
- JP-A- 10 132 061
- JP-A- 2006 226 215
- US-A- 4 099 422

## Beschreibung

Die Erfindung betrifft ein Zahnriemenrad für eine Nassriemenanwendung, mit einem Radkörper, der auf einer Stirnfläche eine Verzahnung mit Zähnen für einen Zahnriemen aufweist, wobei zwischen jeweils zwei Zähnen eine Zahnlücke mit einem Zahnlückenboden ausgebildet ist, und mit mindestens einem Bord, der - in axialer Richtung - seitlich an dem Radkörper angeordnet ist, und die Verzahnung in radialer Richtung überragt. Zahnriemenradantriebe werden in Motoren eingesetzt, um mehrere voneinander beabstandete Achsen mittels Zahnriemen synchron zu koppeln bzw. generell um Antriebsenergie von einer Achse zu einer davon unabhängigen Achse übertragen zu können. Es ist damit möglich, mittels eines Motors mehrere voneinander unabhängige Achsen anzutreiben. Der Antrieb von mehr als zwei Achsen kann mittels eines einzigen Zahnriemens gewährleistet werden, der über eine entsprechende Anzahl von Zahnriemenrädern geführt wird. Es ist aber auch möglich, diesen Zahnriemenantrieb als Kaskadenanordnung auszubilden, indem je Achsenpaar ein separater Zahnriemen vorgesehen ist.

Üblicherweise sind Zahnriemenräder mit einem so genannten Bord ausgebildet, der ein seitliches Abrutschen des Zahnriemens von Zahnriemenrad während des Betriebs verhindert.

Der Großteil der heute verwendeten Zahnriemenantriebe ist für den Trockenbetrieb, also ohne Schmiermittel vorgesehen, allerdings ist in der Entwicklung der Motorenindustrie ein Trend absehbar, dass beispielsweise Steuertriebe, Ausgleichswellen oder Nebentriebe künftig mehrheitlich von so genannten nasslaufenden Zahnriemen angetrieben werden, also Zahnriemen, welche durch ein Schmieröl benetzt werden, nicht zuletzt deswegen, da diese Zahnriemenantriebe in Kombination mit herkömmlichen Zahnradantrieben verwendet werden, wobei für letztere zur Reduktion des Verschleißes Schmiermittel eingesetzt werden. Dokument DE 3124320 A1 wird als nächstliegender Stand der Technik angesehen und offenbart die Merkmale des Oberbegriffs der Ansprüche 1 und 7. Aufgabe vorliegender Erfindung ist es, ein Zahnriemenrad für Nassriemenanwendungen mit verbesserter Eingriffskinematik bereitzustellen.

Diese Aufgabe wird durch das eingangs genannte Zahnriemenrad gelöst, bei dem im Bereich des Zahnlückenbodens und an einer inneren Oberfläche des Bords, die der Verzahnung zugewandt ist, Nuten zur Abfuhr eines Schmiermittels ausgebildet sind. Mit Hilfe dieser Nuten kann das hydrodynamische Verhalten des nass angetriebenen Zahnriemensystems insofern verbessert werden, als diese als Abflusskanäle für das Schmiermittel, welches mit dem Zahnriemen auf das Zahnriemenrad oder durch Eintauchen des Zahnriemenrades in ein Schmiermittelwanne auf dieses übertragen wird, dienen, sodass dieses Schmiermittel, insbesondere Schmieröl, aus dem Bereich des Zahnriemenrades durch Ausquetschen infolge des Eingriffes des Zahnriemens mit dem Zahnriemenrad abtransportiert werden kann und damit einerseits ein besserer Eingriff des Zahnriemens am Zahnriemenrad, d.h. mit der Verzahnung, ermöglicht wird und anderseits damit auch eine Reduktion der Reibleistung des Ölnebels erzielt werden kann.

Gemäß einer Weiterbildung der Erfindung können die Nuten im Zahnlückenboden zentrisch zwischen jeweils zwei Zähnen ausgebildet sein, wobei diese Nuten insbesondere am tiefsten Punkt des Zahnlückenbodens angeordnet sind, wodurch die Verdrängung des Öls und dessen Abfuhr erleichtert wird.

In dem bzw. den Bord(en) im Bereich der Nuten im Zahnlückenboden können auch in axialer Richtung durchgängige Ausnehmungen angeordnet sein, sodass also das Öl durch diese Ausnehmungen in dem Bord bzw. den Borden zumindest teilweise aus dem Eingriffsbereich des Zahnriemens mit dem Zahnriemenrad abtransportiert wird.

Es ist dabei möglich, dass diese durchgängigen Ausnehmungen schlitzartig ausgebildet sind, sodass der Bord bzw. die Borde in diesem Bereich der Verzahnung zumindest annähernd segmentartig ausgebildet sind. Es ist damit möglich, ein größeres Volumen an Schmiermittel abzuführen, unter Ausnutzung der Zentrifugalkraft, welche auf das Schmiermittel im Bereich dieser schlitzartigen Ausnehmungen einwirkt.

Die Nuten im bzw. in den Bord(en) können bogenförmig ausgebildet sein, wobei insbesondere das offene Ende der Nuten im Bereich der Stimfläche(n) des Bordes bzw. der Borde gegen die Laufrichtung des Zahnriemenrades in Einbaulage gerichtet ist, um damit ebenfalls für die Abfuhr des Schmiermittels die Zentrifugalkraft unterstützend heranziehen zu können, wobei durch die gegen die Laufrichtung offenen Enden der Nuten das abgeführte Schmiermittel auf die äußere Oberfläche des Zahnriemens abgeführt werden kann und somit eine Schmierung des Zahnriemens zusätzlich erreicht werden kann.

Es ist auch möglich, dass der bzw. die Bord(e) im Bereich einer Stirnfläche an der der Verzahnung zugewandten Seite abgeschrägt ist bzw. sind, um damit den Austrag des Schmiermittels aus dem Eingriffsbereich zwischen Zahnriemen und Zahnriemenrad zu verbessern. Die Nuten können gebrochene Kanten aufweisen, um damit den Eintritt des Schmiermittels in diese Nuten zu verbessern.

Der Radkörper und/oder der bzw. die Bord(e) sind insbesondere aus einem Sinterwerkstoff gebildet, da damit die Herstellbarkeit dieser Bauteile mit den Nuten vereinfacht werden kann, ohne zusätzliche Nachbearbeitung der Rohlinge, wie dies beispielsweise bei einem Spritzgussteil erforderlich wäre.

Zum besseren Verständnis der Erfindung wird diese anhand der nachfolgenden Figuren näher erläutert.

Es zeigen jeweils in stark schematisch vereinfachter Darstellung:
- Fig. 1: eine Schrägansicht eines nicht beanspruchten Zahnriemenrades mit einem Nuten aufweisenden Bord;
- Fig. 2: eine Schrägansicht eines nicht beanspruchten Zahnriemenrades mit Nuten im Bereich des Zahnlückenbodens;
- Fig. 3: eine Ausführung eines Zahnriemenrades mit einem Bord in Schrägansicht mit Nuten im Bord und im Zahnlückenboden;
- Fig. 4: eine Seitenansicht einer Ausführungsvariante eines Bordes mit Nuten;
- Fig. 5: eine Seitenansicht eines Bordes mit bogenförmig ausgebildeten Nuten;
- Fig. 6: ein Bord in Seitenansicht geschnitten mit gekrümmt verlaufenden Nuten;
- Fig. 7: eine Stirnflächenansicht eines Zahnriemenrades, geschnitten mit gekrümmt verlaufenden Nuten;
- Fig. 8: eine Ausführungsvariante eines Zahnriemenrades mit einem Bord in Seitenansicht mit zwei Nuten im Zahnlückenboden;
- Fig. 9: eine Ausführungsvariante eines Zahnriemenrades mit einem Bord mit zwei Nuten pro Zahnlücke im Bord;
- Fig. 10: eine Schrägansicht eines Zahnriemenrades mit zwei Borden;
- Fig. 11: eine Ausführungsvariante eines Zahnriemenrades mit Borden für die Anordnung von zwei Zahnriemen.

Einführen sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

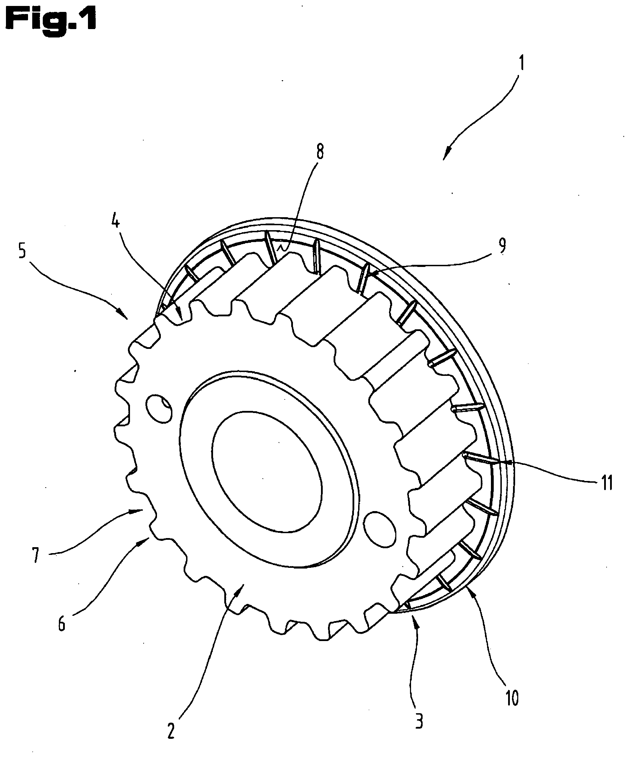

In Fig. 1 ist ein Zahnriemenrad 1 in Schrägansicht dargestellt. Dieses Zahnriemenrad 1 umfasst einen Radkörper 2, sowie einen Bord 3, der bei dieser Ausführungsvariante als Bordscheibe ausgebildet ist. Der Bord 3 ist an einer Seitenfläche des Radkörpers 2 angeordnet.

Der Radkörper 2 weist an einer Stirnfläche 4 eine Verzahnung 5 auf. Diese Verzahnung wird durch Zähne 6, zwischen denen Zahnlücken 7 ausgebildet sind, gebildet. Die Geometrie der Zähne 6 sowie die Geometrie der Zahnlücken 7 sind so ausgebildet, dass damit ein Eingriff mit einem Zahnriemen erfolgen kann. Da Zahnriemenräder 1 hinsichtlich ihrer geometrischen Ausgestaltung, insbesondere der Unterschiede zu Kettenrädern bzw. Zahnradrädern für Kettentriebe bzw. Zahnradtriebe, bereits aus dem Stand der Technik bekannt sind, erübrigt sich eine weitere Erörterung an dieser Stelle und sei der Fachmann daher an die einschlägige Literatur, wie beispielsweise "Dubbel, Taschenbuch für den Maschinenbau, 15. Auflage, 1983, Springer Verlag", verwiesen.

Bei dieser Ausführungsvariante des erfindungsgemäßen Zahnriemenrades 1 sind an einer inneren Oberfläche 8 des Bordes 3 im Bereich der Zahnlücken 7 Nuten 9 ausgebildet. Insbesondere ist pro Zahnlücke 7 eine Nut 9 angeordnet. Diese Nuten 9 haben bei dieser Ausführungsvariante einen radialen Verlauf und sind in Richtung einer Stirnfläche 10 des Bordes 3 mit einem offenen Ende 11 ausgebildet.

Der Radkörper 2 und der Bord 3 sind bevorzugt aus Sinterbauteilen hergestellt, wobei die Sintertechnik - wie bekannt - das Mischen eines Sinterpulvers gegebenenfalls mit diversen Zusätzen, wie Schmiermittel, etc. um die Entformbarkeit des Sinterbauteils zu erleichtern, weiters das Verpressen des Sinterpulvers in einer Pressmatrize zu einem Grünling und das Sintern des Grünlings bei Sintertemperatur, die sich nach dem verwendeten Metallpulver bzw. metallischen Pulver richtet, umfasst. Die Sinterpulver sind üblicherweise Metallpulver bzw. metallische Pulver für Sinterlegierungen, können auch bereits vorlegierte Pulver sein. Nach dem Sintern erfolgt gegebenenfalls eine Kalibrierung des Sinterbauteils, um die Maßgenauigkeit zu erhöhen.

Als Sinterpulver bzw. Sinterlegierungspulver können beispielsweise ein Sintereisen oder eine Sinterstahl bzw. Pulver gemäß der Norm SINT E 35, SINT E 36, SINT E 39, oder aber auch andere aus dem Stand der Technik bekannte Sinter(legierungs)pulver verwendet werden.

Es ist auch möglich, dass der Bord 3 mit dem Radkörper 2 des Zahnriemenrades 1 einen einstückigen Bauteil bildet, es also nicht notwendig ist, den Bord 3 über zusätzliche Hilfsmittel, wie z.B. Schweißpunkt bzw. Verschweißungen an sich, oder Verschraubungen, etc. am Radkörper 2 zu befestigen.

Obwohl die sintertechnische Herstellung des Zahnriemenrades 1 bevorzugt ist, ist es prinzipiell möglich, dieses Zahnriemenrad 1 auch mit anderen Herstellungsmethoden zu fertigen, beispielsweise durch Guss- oder Spritzgusstechniken. Die Sintertechnologie bietet jedoch eine Möglichkeit zur vereinfachten Herstellung des Zahnriemenrades 1, insbesondere zur Ausbildung der Nuten 9, sodass gegebenenfalls keine mechanische Nachbearbeitung zur Ausbildung der Nuten 9 oder zur Säuberung derselben erforderlich ist.

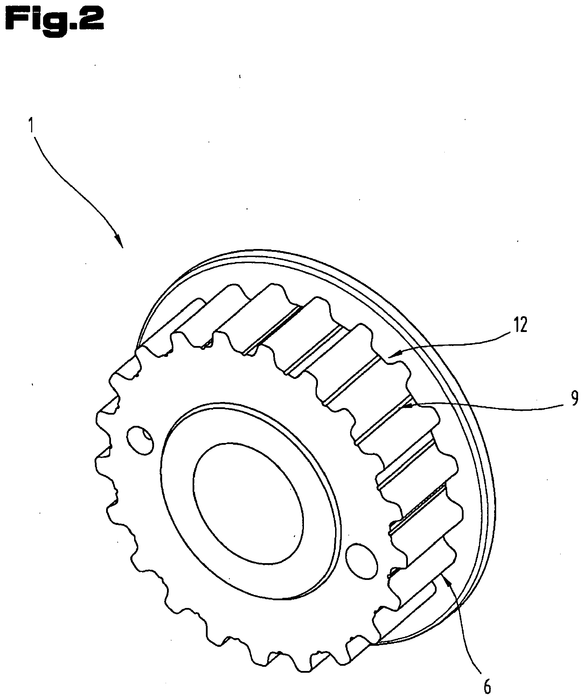

Fig. 2 zeigt eine Ausführungsvariante zum Zahnriemenrad 1 nach Fig. 1, bei dem die Nuten 9 nicht an der inneren Oberfläche 8 des Bordes 3 ausgebildet sind, sondern in einem Zahnlückenboden 12. Insbesondere ist wiederum pro Zahnlückenboden 12 zwischen zwei Zähnen 6 jeweils eine Nut 9 angeordnet. Bevorzugt erstreckt sich diese Nut 9 über die gesamte Breite der Stirnfläche 4 des Radkörpers 2.

In einer nicht dargestellten Abwandlung dazu weist das Zahnriemenrad 1 keinen Bord 3 auf und sind Nuten 9 in den Zahnlückenböden 12 angeordnet.

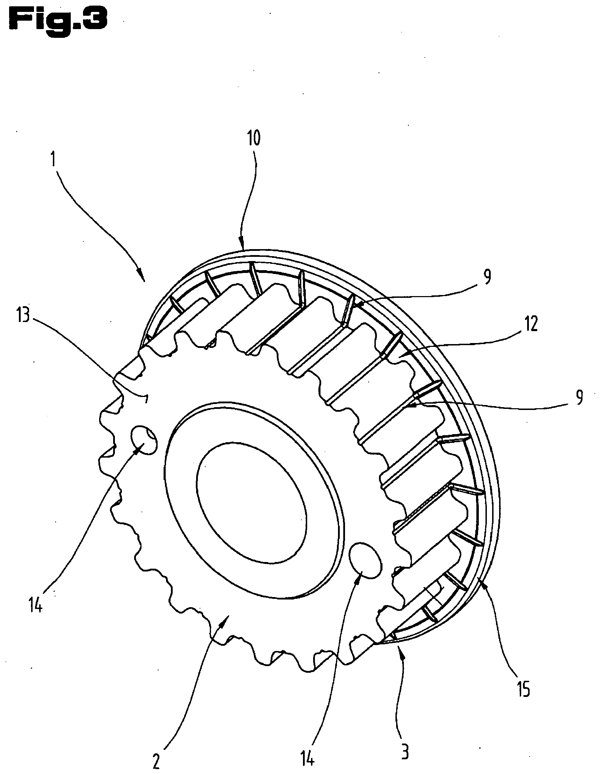

Bei der Ausführungsvariante nach Fig. 3 sind die Nuten 9 sowohl im Bord 3, d.h. an seiner inneren Oberfläche 8, welche der Verzahnung 5 zugewandt ist, als auch im Zahnlückenboden 12 des Radkörpers 2 ausgebildet. Bevorzugt sind die Nuten 9 im Bord 3 im Verlauf der Nuten 9 im Zahnlückenboden 12 angeordnet, sodass also das zu verdrängende Öl aus den Nuten 9 im Zahnlückenboden 12 in die Nuten 9 im Bord 3 einströmen und über diese aus dem Eingriffsbereich des Zahnriemens mit dem Zahnriemenrad 1 abgeführt werden kann. Selbstverständlich ist jedoch auch eine versetzte Anordnung der Nuten 9 im Bord 3 zu den Nuten 9 im Zahnlückenboden 12 möglich, wenngleich dies nicht die bevorzugte Ausführung der Erfindung ist.

Wie aus den Fig. 1 bis 3 ersichtlich ist, sind an einer seitlichen Oberfläche 13 des Radkörpers 2 zwei in radialer Richtung einander gegenüberliegende Vertiefungen 14 zum Eingriff eines Spannwerkzeuges für den Zahnriemenantrieb ausgebildet. Diese beiden Vertiefungen 14 können unterschiedlicher Geometrie sein, um damit den richtigen Eingriff des Werkzeuges zu gewährleisten bzw. ist es auch möglich, mehrere Vertiefungen 14, d.h. mehr als zwei an bzw. in der Oberfläche 13 anzuordnen, um das Spannen des Zahnriemens zu ermöglichen.

Die Breite der Stirnfläche 4 des Radkörpers 2 ist bevorzugt so bemessen, dass diese größer ist als die Breite des Zahnriemens, sodass in gewissen Grenzen ein seitliches Verschieben des auf dem Zahnriemenrad 1 laufenden Zahnriemens ermöglicht wird.

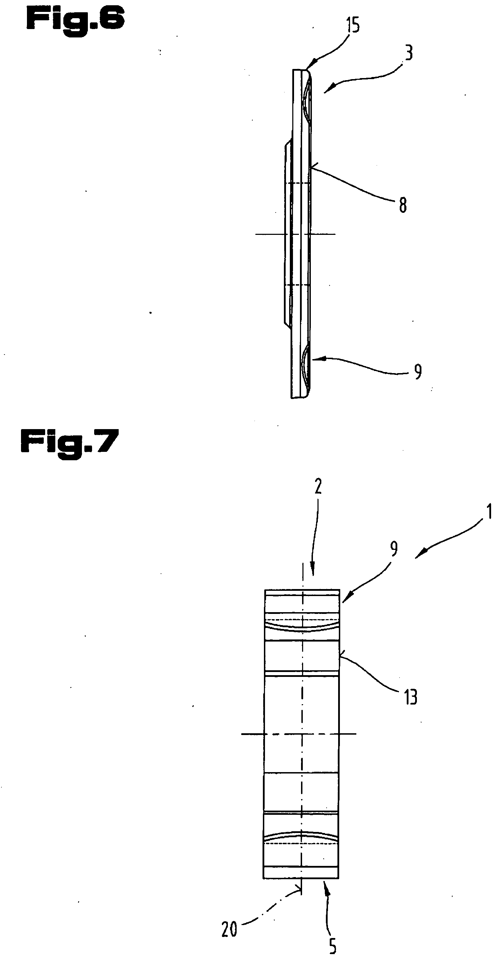

Bei den Ausführungsvarianten nach den Fig. 1 bis 3 weist der Bord 3, d.h. die Bordscheibe, im Bereich der Stirnfläche 7 eine Abschrägung 15 (Fig. 3) auf, wie dies auch besser aus Fig. 6 ersichtlich ist. Es ist also die Kante im Bereich der Stirnfläche 10 des Bordes 3 gebrochen. Diese Abschrägung 15 ist dabei so ausgebildet, dass sich der Querschnitt des Bordes 3 in Richtung auf seine Stirnfläche 10 verjüngt. Mit Hilfe dieser Abschrägung 15 wird einerseits eine Beschädigung des Zahnriemens durch scharfe Kanten vermieden, andererseits kann damit auch der Austritt des Schmiermittels aus den Nuten 9 unterstützt werden.

Die Kanten bzw. Übergänge zwischen der Abschrägung 15 und der Stirnfläche 10 bzw. der Abschrägung 15 und dem in radialer Richtung darunter liegenden Bereich des Bordes 3 können auch mit Rundungen versehen sein, um dies weiter zu verbessern.

Es ist weiters möglich, dass auch die Nuten 9 mit Abschrägungen bzw. gebrochenen oder gerundeten Kanten versehen sind, ebenfalls wiederum um eine Beschädigung des Zahnriemens zu vermeiden und um den Eintritt des Schmiermittels in die Nuten 9 zu erleichtern.

Die Nuten 9 können mit einem beliebigen Querschnitt ausgebildet sein, beispielsweise rechteckig, quadratisch, dreieckig oder dgl., bevorzugt sind diese Nuten 9 jedoch mit einem runden Querschnitt ausgebildet, wobei die Rundung im Nutengrund einen größeren Radius aufweisen kann, als der Radius im Bereich des Überganges von der inneren Oberfläche 8 des Bordes in die Nut 9. Dies trifft auch auf die Nuten 9 im Zahnlückenboden 12 zu.

Die Nuten 9 im Bord 3 erstrecken sich bei den bisher dargestellten Ausführungsbeispielen entsprechend den Fig. 1 bis 3 bis in die Stirnfläche 10 des Bordes 3.

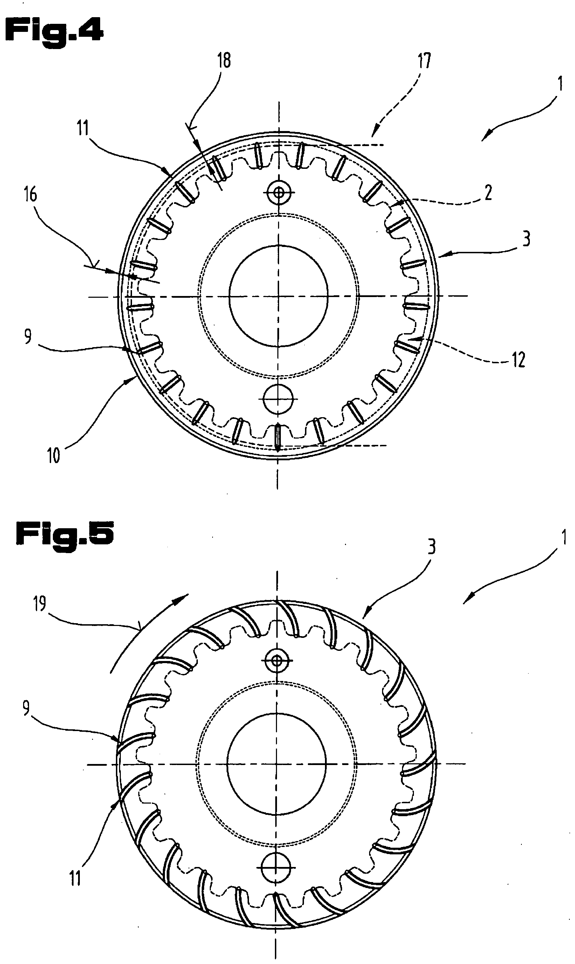

Zum Unterschied dazu ist in Fig. 4 eine Ausführungsvariante eines Bordes 3 dargestellt, bei der die Nuten 9 sich nicht bis in den Bereich der Stirnfläche 10 des Bordes 3 erstrecken. In Fig. 4 ist dabei weiters strichliert der Radkörper 2 angedeutet. Diese Nuten 9 verlaufen beginnend am Zahnlückenboden 12 in radialer Richtung auf die Stirnfläche 12 und enden in einem Abstand 16 zu dieser Stirnfläche 10. Es wird damit erreicht, dass das Schmiermittel nicht zur Gänze aus dem Eingriffsbereich des Zahnriemens mit dem Zahnriemenrad 1 austritt, sondern wird dies vielmehr oberhalb des Zahnriemens - es ist in Fig. 4 strichliert ein Zahnriemenabschnitt 17 dargestellt, diesem zugeführt, um damit den Zahnriemen zusätzlich zu schmieren. Dazu ist der Abstand 16 so gewählt, dass das Ende 11 oberhalb des Zahnriemens ausgebildet ist, also der Abstand 16 kleiner ist als ein Abstand 18 zwischen dem Zahnriemen und der Stirnfläche 10 des Bordes 3.

Die Ausführungsvariante nach Fig. 5 zeigt einen Bord 3 in Seitenansicht, bei dem die Nuten 9 einen gekrümmten Verlauf einnehmen. Im Wesentlichen erinnert die Anordnung dieser gekrümmten Nuten 9 an ein Turbinenrad, wobei die Schaufeln durch die Nuten 9 gebildet sind. Die Enden 11 der Nuten 9 sind gegen eine Laufrichtung (Pfeil 19) des Zahnriemenrades 1 im eingebauten Zustand geneigt. Durch diese Krümmung wird der Austritt des Schmiermittels infolge der Zentrifugalkraft, welche durch das Drehen des Zahnriemenrads 1 auf das Schmiermittel einwirkt, begünstigt, wobei das Schmiermittel auf die jeweils folgenden Oberflächen des Zahnriemens "geworfen" wird, um damit wiederum diesen Zahnriemen zusätzlich zu schmieren.

Die Fig. 6 zeigt eine Ausführung des Bordes 3, bei der die Nuten 9 ebenfalls eine Krümmung aufweisen, wobei diese Krümmung allerdings dadurch entsteht, dass die Nuten 9 über ihren Verlauf eine unterschiedliche Tiefe im Körper des Bords 3 einnehmen. Beispielsweise können die Nuten 9 kreisbogensegmentartig ausgebildet sein. Es wird damit erreicht, dass das Schmiermittel, das sich in diesen Nuten 9 befindet, in Richtung auf die innere Oberfläche 8 des Bordes 3 umgelenkt wird und somit beim Verlassen der Nut 9 im Bereich oberhalb der Stirnfläche 4 des Radkörpers 2 (Fig. 1) austritt und damit wiederum auf die äußere Oberfläche des Zahnriemens gelangen kann, um diesen zu schmieren.

Auch die Ausführungsvariante nach Fig. 7 weist einen gekrümmten Verlauf der Nuten 9 auf, allerdings im Radkörper 2 des Zahnriemenrades 1. Es wird auch damit ein verbesserter Schmiermittelaustritt aus dem Eingriffsbereich zwischen Zahnriemen und Zahnriemenrad 1 bzw. der Verzahnung 5 erreicht. Bei dieser Ausführungsvariante weisen die Nuten 9 ihren tiefsten Punkt in einer mittig ausgebildeten Querschnittsebene 20, die sich parallel zu der Oberfläche 13 des Radkörpers 2 erstreckt, auf.

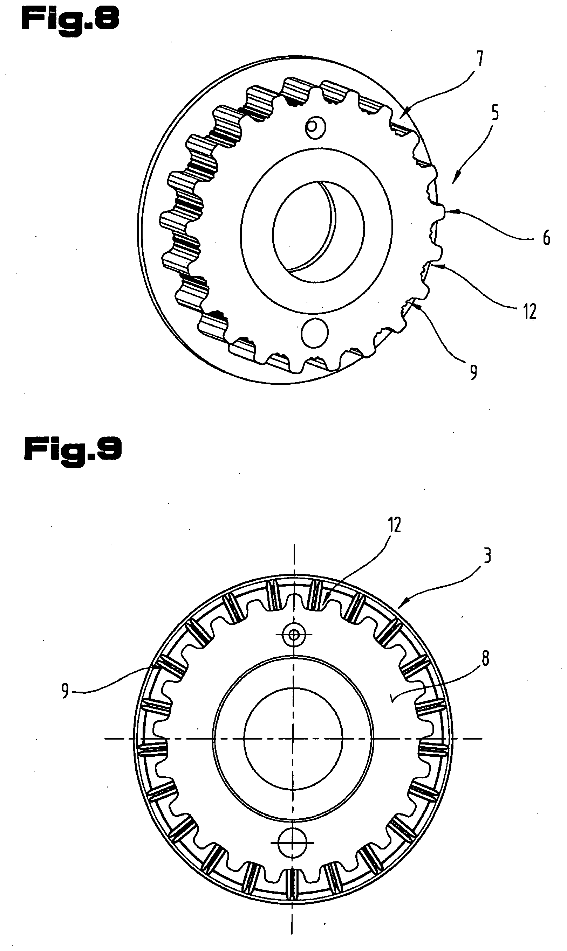

Bei den bisherigen Ausführungsvarianten ist jeweils eine Nut 9 pro Zahnlücke 7 ausgebildet. Die Fig. 8 und 9 sollen dem gegenüber verdeutlichen, dass pro Zahnlücke 7 einerseits mehrere Nuten 9 im Bereich des Zahnlückenbodens 12 angeordnet sein können, beispielsweise zwei nach Fig. 8, wobei diese Nuten 9 nicht mehr zentrisch zwischen zwei Zähnen 6 der Verzahnung 5 angeordnet sind, wie dies bei den bisherigen Ausführungsbeispielen der Fall ist, sondern gegenüber einer Mittellage versetzt angeordnet sind. Fig. 9 zeigt dazu eine mögliche Ausführungsvariante, bei der die zwei Nuten 9 pro Zahnlücke 12 im Bord 3, d.h. der inneren Oberfläche 8 des Bordes 3, ausgebildet sind. Selbstverständlich können auch mehr als zwei Nuten sowohl im Radkörper 2 als auch im Bord 3 angeordnet sein.

Es sei an dieser Stelle erwähnt, dass die zentrische Ausbildung der Nuten 9 bei nur einer Nut 9 im Radkörper 2 und/oder dem Bord 3 nicht zwingend erforderlich ist - wenngleich dies die bevorzugte Variante ist - es ist dementsprechend auch eine azentrische Anordnung zwischen zwei Zähnen 6 der Verzahnung 5, gegebenenfalls von Vorteil.

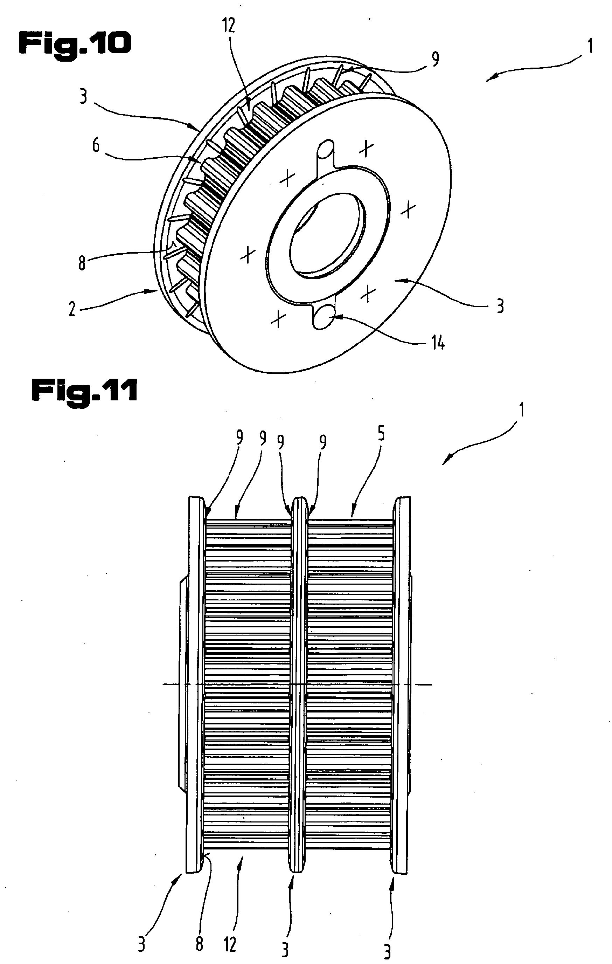

In Fig. 10 ist eine Ausführungsvariante des Zahnriemenrades 1 dargestellt, bei der der Radkörper 2 in axialer Richtung jeweils von einem Bord 3, d.h. einer Bordscheibe, begrenzt ist. Beide Borde 3 können an ihren inneren Oberflächen 8 die Nuten 9 aufweisen, ebenso können Nuten 9 im Radkörper 2 zwischen zwei Zähnen 6 im Zahnlückenboden 12 angeordnet sein. Auch bei dieser Ausführungsvariante ist es möglich, die Borde 3 und den Radkörper 2 gesondert herzustellen und diese über zusätzliche Hilfsmittel beispielsweise Verschraubungen am Radkörper 2 zu befestigen bzw. ist es möglich, zumindest einen Bord 3 einstückig mit dem Radkörper 2 herzustellen und den zweiten Bord 3 z.B. über Schweißpunkte (in Fig. 10 mit X gekennzeichnet) mit dem Radkörper 2 zu verbinden. Es ist weiters möglich, dass bei entsprechender Ausbildung der Pressmatrize mit einer seitlichen Verfahrbarkeit der Matrizenhälften - in.radialer Richtung des Zahnriemenrades 1 - beide Borde 3 einstückig mit dem Radkörper 2 auszubilden.

Der zweite Bord 3 nach Fig. 10 kann im Bereich der Vertiefungen 14 im Radkörper 2, d.h. dessen Oberfläche 13 (Fig. 7), entsprechende Ausnehmungen aufweisen, um die Zugänglichkeit der Vertiefung 14 zu ermöglichen, wenn dieser Bord 3 gesondert hergestellt und extra mit dem Radkörper 2 verbunden wird.

Fig. 11 zeigt eine Ausführungsvariante, bei der das Zahnriemenrad 1 für mehr als einen Zahnriemen vorgesehen ist, wobei bei dieser Ausführungsvariante drei Borde 3 angeordnet sind, mit zwei äußeren Borden 3 sowie einem dazwischen liegenden Bord 3, der die beiden Eingriffsbereiche für die beiden Zahnriemen mit der Verzahnung 5 des Zahnriemenrades 1 voneinander trennt. Auch bei dieser Ausführungsvariante sind Nuten 9 in inneren Oberflächen 8 der Borde 3 und/oder im Bereich des Zahnlückenbodens 12 der Verzahnung 5 angeordnet und kann bei dieser Ausführungsvariante der innere Bord 3, der zwischen den beiden äußeren Borden 3 ausgebildet ist, keine Nuten 9 aufweisen bzw. ist es möglich, an zumindest einer Oberfläche des inneren Bordes 3, bevorzugt an beiden einander gegenüberliegenden Oberflächen, diese Nuten 9 anzuordnen.

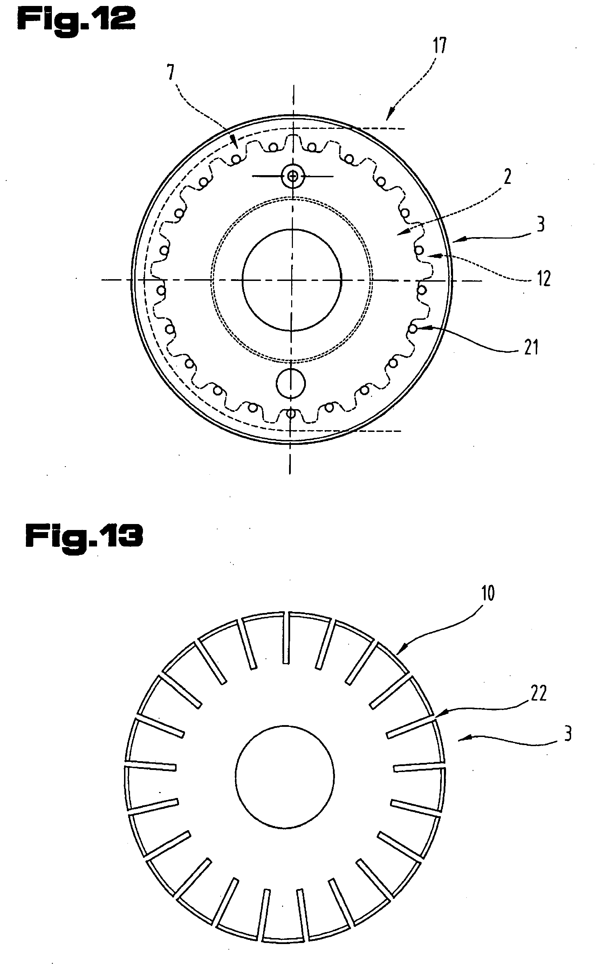

Fig. 12 zeigt eine Ausführungsvariante, bei der im Bord 3 anstelle der Nuten 9 Bohrungen 21 vorgesehen sind, wobei diese Bohrungen 21 durch den Bord 3 durchgängig ausgebildet sind. Wiederum ist bevorzugt zumindest eine Bohrung 21, es können also auch mehr als eine Bohrung 21 vorhanden sein, pro Zahnlücke 7 - der Radkörper 2 und der Zahnriemenabschnitt 17 sind wiederum strichliert angedeutet - ausgebildet sind. Es erfolgt also bei dieser Ausführungsvariante das Abführen des Schmiermittels nicht über innere Nuten 9 im Bord 3, sondern durch diese Bohrungen 21 in einen Außenbereich des Zahnriemenrades 1 (Fig. 1). Bevorzugt sind die Bohrungen 21 in Höhe des Zahnlückenbodens 12 im Bereich der Nuten 9 angeordnet.

Bei der Ausführungsvariante nach Fig. 13 sind schließlich diese Ausnehmungen im Bord 3 durch Schlitze 22 bzw. schlitzartig ausgebildet, sodass der Bord 3 im Bereich der Stirnfläche 10 segmentartig ausgebildet ist. Bevorzugt erstrecken sich diese Schlitze 22 von der Stirnfläche 10 bis in den Bereich des Zahnlückenbodens 12 (z.B. Fig. 8) zwischen den Zähnen 6 (Fig. 1) des Radkörpers 2.

Es sind auch andere Ausführungsvarianten möglich, z.B. eine Kombination aus Nut 9 und Bohrung 21 oder Schlitz 22 im Bord 3, wobei die Nuten 9 in diese Bohrungen 21 oder Schlitze 22 in einer vorbestimmbaren Höhe über dem Radkörper 2 übergehen. Auch andere Abführungen des Schmiermittels aus dem Eingriffsbereich Zahnriemen/Verzahnung 5 sind möglich.

Es ist weiters möglich, dass das Zahnriemenrad 1 mit dem bzw. den Bord(en) 3 aus unterschiedlich hergestellten Bauteilen besteht, beispielsweise können der Radkörper 2 aus einem Sinterwerkstoff und die Borde nach einem Tiefziehverfahren oder der Radkörper 2 mit einem Bord 3 bzw. und ein Bord 3 und der weitere Bord 3 aus einem Tiefziehteil hergestellt sein.

Das erfindungsgemäße Zahnriemenrad 1 kann insbesondere für Steuertriebe, Nebentriebe und Ausgleichswellen im Kfz Bereich bzw. Motorenbereich verwendet werden.

Die Ausführungsbeispiele zeigen mögliche Ausführungsvarianten des Zahnriemenrades 1 bzw. des Radkörpers 2 bzw. des Bordes 3, wobei an dieser Stelle bemerkt sei, dass die Erfndung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Zahnriemenrades 1 bzw. des Radkörpers 2 bzw. des Bordes 3 diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2; 3; 3; 4; 5; 6; 7; 8; 9; 10; 11; 12 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Zahnriemenrand
- 2: Radkörper
- 3: Bord
- 4: Stirnfläche
- 5: Verzahnung

- 6: Zahn
- 7: Zahnlücke
- 8: Oberfläche
- 9: Nut
- 10: Stirnfläche

- 11: Ende
- 12: Zahnlückenboden
- 13: Oberfläche
- 14: Vertiefung
- 15: Abschrägung

- 16: Abstand
- 17: Zahnriemenabschnitt
- 18: Abstand
- 19: Laufrichtung
- 20: Querschnittsebene

- 21: Bohrung
- 22: Schlitz

## Patentansprüche

1. Verwendung eines Zahnriemenrades (1) mit einem Radkörper (2), der auf einer Stirnfläche (4) eine Verzahnung (5) mit Zähnen (6) für einen Zahnriemen aufweist, wobei zwischen jeweils zwei Zähnen (6) eine Zahnlücke (7) mit einem Zahnlückenboden (12) ausgebildet ist, wobei im Bereich des Zahnlückenbodens (12) Nuten (9) zur Abfuhr eines Schmiermittels ausgebildet sind, und wobei in axialer Richtung seitlich an dem Radkörper (2) zumindest ein Bord (3) angeordnet ist, der die Verzahnung (5) in radialer Richtung überragt, wobei an einer inneren Oberfläche (8) des Bordes (3), die der Verzahnung (5) zugewandt ist, Nuten (9) zur Abfuhr eines Schmiermittels ausgebildet sind, **dadurch gekennzeichnet dass** die Nuten einen radialen Verlauf aufweisen und in Richtung auf eine Stirnfläche (10) des Bordes (3) mit einem offenen Ende (11) für eine ausgebildet sind Nassriemenanwendung.

2. Verwendung des Zahnriemenrades (1) nach Anspruch 1, wobei die Nuten (9) im Zahnlückenboden (12) zentrisch zwischen jeweils zwei Zähnen (6) ausgebildet sind.

3. Verwendung des Zahnriemenrades (1) nach Anspruch 1 oder 2, wobei die Nuten (9) im Radkörper (2) und/oder im bzw. in den Bord(en) (3) bogenförmig ausgebildet sind.

4. Verwendung des Zahnriemenrades (1) nach einem der vorhergehenden Ansprüche, wobei der bzw. die Bord(e) (3) im Bereich einer Stirnfläche (10) an der, der Verzahnung (5) zugewandten Seite abgeschrägt ist bzw. sind.

5. Verwendung des Zahnriemenrades (1) nach einem der vorhergehenden Ansprüche, wobei die Nuten (9) gebrochene Kanten aufweisen.

6. Verwendung des Zahnriemenrades (1) nach einem der Ansprüche 1 bis 5, wobei der Radkörper (2) und/oder der bzw. die Bord(e) (3) aus einem Sinterwerkstoff gebildet sind.

7. Zahnriemenrad (1) für eine Nassriemenanwendung, mit einem Radkörper (2), der auf einer Stirnfläche (4) eine Verzahnung (5) mit Zähnen (6) für einen Zahnriemen aufweist, wobei zwischen jeweils zwei Zähnen (6) eine Zahnlücke (7) mit einem Zahnlückenboden (12) ausgebildet ist, und mit zumindest einem Bord (3), der - in axialer Richtung - seitlich an dem Radkörper (2) angeordnet ist und die Verzahnung (5) in radialer Richtung überragt, wobei im Bereich des Zahnlückenbodens (12) Nuten (9) ausgebildet sind, und zusätzlich an einer inneren Oberfläche (8) des Bordes (3), die der Verzahnung (5) zugewandt ist, Nuten (9) zur Abfuhr eines Schmiermittels ausgebildet sind, **dadurch gekennzeichnet dass** die Nuten einen radialen Verlauf aufweisen und in Richtung auf eine Stirnfläche (10) des Bordes (3) mit einem offenen Ende (11) ausgebildet sind.

8. Zahnriemenrad (1) nach Anspruch 7, **dadurch gekennzeichnet, dass** die Nuten (9) im Radkörper (2) und/oder im bzw. in den Bord(en) (3) bogenförmig ausgebildet sind.

9. Zahnriemenrad (1) nach Anspruch 7 oder 8, **dadurch gekennzeichnet, dass** der bzw. die Bord(e) (3) im Bereich einer Stirnfläche (10) an der, der Verzahnung (5) zugewandten Seite abgeschrägt ist bzw. sind.

10. Zahnriemenrad (1) nach einem der Ansprüche 7 bis 9, **dadurch gekennzeichnet, dass** die Nuten (9) gebrochene Kanten aufweisen.

11. Zahnriemenrad (1) nach einem der Ansprüche 7 bis 10, **dadurch gekennzeichnet, dass** der Radkörper (2) und/oder der bzw. die Bord(e) (3) aus einem Sinterwerkstoff gebildet sind.

## Claims

1. Use of a belt pulley (1) with a wheel body (2) comprising toothing (5) with teeth (6) on one end face (4) for a toothed belt, wherein a tooth gap (7) with a tooth gap base (12) is disposed between every two teeth (6), wherein grooves (9) are provided in the region of the tooth gap base (12) for removing a lubricant, and wherein at least one flange (3) is arranged on the side of the wheel body (2) in an axial direction, which extends beyond the toothing (5) in a radial direction, wherein grooves (9) are disposed on the inner surface (8) of the flange (3) facing the toothing (5) for removing a lubricant, **characterized in that** the grooves exhibit a radial progression, and are designed with an open end (11) in the direction toward an end face (10) of the flange (3) for a wet belt application.

2. Use of the belt pulley (1) according to claim 1, wherein the grooves (9) are disposed in the tooth gap base (12) centrally between two respective teeth (6).

3. Use of the belt pulley (1) according to claim 1 or 2, wherein the grooves (9) in the wheel body (2) and/or in the flange(s) (3) are of an arcuate shape.

4. Use of the belt pulley (1) according to one of the preceding claims, wherein the flange(s) (3) is or are angled in the region of an end face (10) on the side facing the toothing (5).

5. Use of the belt pulley (1) according to one of the preceding claims, wherein the grooves (9) have stepped edges.

6. Use of the belt pulley (1) according to one of the claims 1 to 5, wherein the wheel body (2) and/or the flange(s) (3) are made from a sintered material.

7. A belt pulley (1) for a wet belt application, with a wheel body (2) comprising toothing (5) with teeth (6) on one end face (4) for a toothed belt, wherein a tooth gap (7) with a tooth gap base (12) is disposed between every two teeth (6), and with at least one flange (3) which is disposed - in the axial direction - on the side of the wheel body (2) and extends beyond the toothing (5) in a radial direction, wherein grooves (9) are provided in the region of the tooth gap base (12), and grooves are additionally disposed on the inner surface (8) of the flange (3) facing the toothing (5) for removing a lubricant, **characterized in that** the grooves exhibit a radial progression, and are designed with an open end (11) in the direction toward an end face (10) of the flange (3).

8. The belt pulley (1) according to claim 7, **characterized in that** the grooves (9) are disposed in the wheel body (2) and/or in the flange(s) (3) in an arcuate shape.

9. The belt pulley (1) according to claim 7 or 8, **characterized in that** the flange(s) (3) is or are angled in the region of an end face (10) on the side facing the toothing (5).

10. The belt pulley (1) according to one of claims 7 to 9, **characterized in that** the grooves (9) have stepped edges.

11. The belt pulley (1) according to one of claims 7 to 10, **characterized in that** the wheel body (2) and/or the flange(s) (3) are made from a sintered material.

## Revendications

1. Utilisation d'une roue de courroie dentée (1) avec un corps de roue (2), qui comprend, sur une face frontale (4), une denture (5) avec des dents (6) pour une courroie dentée, moyennant quoi, entre deux dents (6), se trouve un interstice (7) avec un fond d'interstice (12), moyennant quoi, au niveau du fond de l'interstice (12), se trouvent des rainures (9) pour l'évacuation d'un lubrifiant et moyennant quoi, dans la direction axiale, latéralement contre le corps de roue (2), se trouve au moins un rebord (3) qui dépasse de la denture (5) dans la direction radiale, moyennant quoi, sur une surface intérieure (8) du rebord (3), qui est orientée vers la denture (5), se trouvent des rainures (9) pour l'évacuation d'un lubrifiant, **caractérisé en ce que** les rainures présentent une extension radiale et sont réalisées en direction d'une face frontale (10) du bord (3) avec une extrémité ouverte (11) pour une utilisation de courroie humide.

2. Utilisation de la roue de courroie dentée (1) selon la revendication 1, les rainures (9) étant réalisées dans le fond de l'interstice (12) de manière centrée entre deux dents (6).

3. Utilisation de la roue de courroie dentée (1) selon la revendication 1 ou 2, les rainures (9) étant réalisées en forme d'arc de cercle dans le corps de roue (2) et/ou dans le ou les rebords (3).

4. Utilisation de la roue de courroie dentée (1) selon l'une des revendications précédentes, le ou les rebords (3) étant chanfreinés au niveau d'une face frontale (10) sur le côté orienté vers la denture (5).

5. Utilisation de la roue de courroie dentée (1) selon l'une des revendications précédentes, les rainures (9) présentant des arêtes cassées.

6. Utilisation de la roue de courroie dentée (1) selon l'une des revendications 1 à 5, le corps de roue (2) et/ou le ou les rebords (3) étant constitués d'un matériau fritté.

7. Roue de courroie dentée (1) pour une utilisation de courroie humide, avec un corps de roue (2), qui comprend, sur une face frontale (4), une denture (5) avec des dents (6) pour une courroie dentée, moyennant quoi, entre deux dents (6), un interstice (7) avec un fond d'interstice (12) est réalisé et avec au moins un rebord (3), qui est disposé, dans la direction axiale, latéralement contre le corps de roue (2) et la denture (5) dépasse dans la direction radiale, moyennant quoi, au niveau du fond de l'interstice (12), sont réalisées des rainures (9), et en outre, au niveau d'une surface interne (8) du rebord (3), qui est orienté vers la denture (5), sont réalisées des rainures (9) pour l'évacuation d'un lubrifiant, **caractérisé en ce que** les rainures présentent une extension radiale et sont réalisées en direction d'une face frontale (10) du rebord (3) avec une extrémité ouverte (11).

8. Roue de courroie dentée (1) selon la revendication 7, **caractérisée en ce que** les rainures (9) sont réalisées en forme d'arc de cercle dans le corps de roue (2) et/ou dans le ou les rebords (3).

9. Roue de courroie dentée (1) selon la revendication 7 ou 8, **caractérisée en ce que** le ou les rebords (3) est ou sont chanfreinés au niveau d'une face frontale (10) sur le côté orienté vers la denture (5).

10. Roue de courroie dentée (1) selon l'une des revendications 7 à 9, **caractérisée en ce que** les rainures (9) présentent des arêtes cassées.

11. Roue de courroie dentée (1) selon l'une des revendications 7 à 10, **caractérisée en ce que** le corps de roue (2) et/ou le ou les rebords (3) sont constitués d'un matériau fritté.
